# EUROPÄISCHE PATENTANMELDUNG

(11) **EP 1 992 458 A1**
(43) Veröffentlichungstag der Anmeldung: **19.11.2008**
(21) Anmeldenummer: 07009701.9
(22) Anmeldetag: 15.05.2007
(51) Int. Cl.: B26D 1/00, B26F 1/44, B23P 15/40

(54) **Messer zur Verwendung bei einer Maschine zum Schneiden oder Stanzen von Blattstapeln sowie Verfahren zum Behandeln eines solchen Messers**

(71) Anmelder: Adolf Mohr Maschinenfabrik GmbH & Co. KG, 65719 Hofheim am Taunus (DE)
(72) Erfinder: Becker, Gerhard, 65817 Eppstein (DE)
(74) Vertreter: Quermann, Helmut

(57) **Zusammenfassung**

Die Erfindung schlägt ein Messer (1) zur Verwendung bei einer Maschine zum Schneiden oder Stanzen von Blattstapeln vor, wobei das Messer einen keilförmigen Messerbereich (3) mit spitzem Messerende (4) aufweist, zur Ausbildung einer ersten Messeroberfläche (2) in der Schneidebene des Messers und einer im Keilwinkel zur ersten Messeroberfläche angeordneten zweiten Messeroberfläche (5). Bei diesem Messer ist zumindest die erste Messeroberfläche rau und dieser raue Bereich des Messers mit einem Antihaftmittel versehen.

Bei einem Verfahren zum Behandeln des Messers sind folgende Verfahrensschritte vorgesehen:
a. Schleifen des Messers im Bereich der zweiten Messeroberfläche,
b. Abdecken des spitzen Messerendes,
c. Aufrauen des Messers bei abdecktem spitzen Messerende im Bereich der ersten Messeroberfläche,
d. Aufbringen des Antihaftmittels auf den aufgerauten Bereich des Messers.

Ein solches Messer, welches überdies im vorbeschriebenen Sinne behandelt ist, verhindert, dass bei Blattstapeln, deren Blätter zumindest teilweise mit einer selbstklebenden Klebeschicht verbunden sind, Klebstoff am Messer haftet und damit den Schneidprozess beeinträchtigt.

## Beschreibung

Die Erfindung betrifft ein Messer zur Verwendung bei einer Maschine zum Schneiden oder Stanzen von Blattstapeln, wobei das Schneidmesser einen keilförmigen Messerbereich mit spitzem Messerende aufweist, zur Ausbildung einer ersten Messeroberfläche in der Schneidebene des Messers und einer im Keilwinkel zur ersten Messeroberfläche angeordneten zweiten Messeroberfläche. Die Erfindung betrifft ferner ein Verfahren zum Behandeln eines solchen Messers.

Solche Messer sind beispielsweise gerade, zur Verwendung in einer Planschneidmaschine, oder ringförmig, zur Verwendung bei einer Stanzmaschine, ausgebildet. Eine solche Planschneidmaschine ist beispielsweise in der EP 0 936 035 A1 beschrieben, eine Stanze in der EP 1 577 063 A1 dargestellt.

Mit einem derartigen Messer werden nicht nur Blattstapel geschnitten, bei denen die einzelnen übereinander angeordneten Blätter des jeweiligen Stapels lose aufeinander liegen. Die Messer werden auch verwendet zum Schneiden von Blattstapeln, deren Blätter zumindest teilweise mit einer selbstklebenden Klebeschicht versehen sind. So ist es bekannt, Papierblöcke wenigstens teilweise mit einer selbstklebenden Klebeschicht zu versehen, wie beispielsweise Haftnotizblöcke oder Barcodeschilder, aber auch selbstklebende Briefmarken, die auf großformatigen Druckbogen aufgedruckt und entsprechend beschnitten werden müssen. Dieser Schnitt erfolgt, je nach Form des zu schneidenden Blatt-Endprodukts mittels der Planschneidmaschine oder der Stanze.

Nachteilig ist beim Schneiden von Blattstapeln, deren Blätter zumindest teilweise mit einer selbstklebenden Klebeschicht versehen sind, dass das Messer nach wenigen Schnitten durch die während des Schneidvorgangs sich ablösenden Klebstoffteile selbst mit Klebstoff versehen ist. Hierdurch kommt es zum Mitführen einzelner Blattbogen, die bei der Rückführung des Messers an diesem haften bleiben und entweder im weiteren zu Fehlschnitten führen oder den Stillstand der Schneidmaschine erforderlich machen.

Zum Beheben dieser Nachteile ist es üblich, das Messer in verhältnismäßig kurzen Abständen zu reinigen. Neben den hohen Stillstandszeiten der Schneidmaschine ist auch der damit verbundene Arbeitsaufwand nachteilig, denn dadurch, dass der Klebstoff sich auch am in Schneidrichtung verlaufenden Messerrücken absetzt, der die erste Messeroberfläche darstellt, ist eine Reinigung des Messers bei Verwendung einer Planschneidmaschine nur vom Hintertisch der Schneidmaschine aus möglich ist, was umständlich ist und auch Gefahren für den Bediener in sich birgt. Eine erforderliche Reinigung des Messerrückens einer Stanze von Klebstoff ist, da der Innenraum der Stanze noch umständlicher zugänglich ist, kaum möglich und birgt wegen des umlaufenden Messerendes erhebliche Gefahren für den Bediener in sich.

Aus der DE 20 2006 004 062 U1 ist eine Reinigungseinrichtung für ein Schneidmesser einer Planschneidmaschine bekannt. Diese Schneidmaschine ist in üblicher Art und Weise mit dem ebenen Schneidmesser und einer Presseinrichtung zum Fixieren des Blattstapels während der Schneidvorgänge ausgerüstet. Die Presseinrichtung weist messerseitig eine mit einem Antihaftmittel versehene Abstreifeinheit auf, die mit dem Schneidmesser in Wirkverbindung steht. Hierdurch soll verhindert werden, dass Klebstoff von Blättern, die zumindest teilweise mit einer selbstklebenden Klebstoffschicht versehen sind, nicht am Schneidmesser haften. - Im Detail besteht die Abstreifeinheit aus einer Nut in der Presseinrichtung, in die ein streifenfähiges Element aus einem saugfähigen, elastischen Material eingebracht ist, das mit dem Antihaftmittel getränkt ist. - Versuche haben gezeigt, dass das Benetzen des Schneidmessers bei jedem Schnitt mit dem Antihaftmittel nicht nachhaltig das Anhaften von Klebstoff am Schneidmesser verhindert. Dies deshalb, weil beim Schnitt das Antihaftmittel unter der Einwirkung des Blattstapels auf das Schneidmesser vom Schneidmesser entfernt wird, womit Klebstoff am Schneidmesser haften kann.

In dieser Schrift ist zum Stand der Technik beschrieben, die Schneidmesserrückenoberfläche chemisch mit einer Antihaftrasterätzung zu bearbeiten, die das Anhaften des Klebstoffs verhindern soll. Hierzu ist ausgeführt, dass der praktische Einsatz solcher Schneidmesser jedoch zeigt, dass die angeführten Nachteile beim Schneiden von Blattstapeln, die eine selbstklebende Kunststoffschicht aufweisen, damit nicht auf Dauer behoben werden können.

Aufgabe der Erfindung ist es, ein Messer zur Verwendung bei einer Maschine zum Schneiden oder Stanzen gemäß der genannten Art so weiter zu bilden, dass ein Haften von Blattstapeln, deren Blätter zumindest teilweise mit einer selbstklebenden Klebeschicht versehen sind, wirksam verhindert wird. Es ist ferner Aufgabe der Erfindung, ein Verfahren zum Behandeln eines Messers zur Erzielung des genannten Effekts anzugeben.

Gelöst wird die Aufgabe bei einem Messer der eingangs genannten Art dadurch, dass zumindest die erste Messeroberfläche rau ist und dieser raue Bereich des Schneidmessers mit einem Antihaftmittel versehen ist.

Erfindungsgemäß ist somit vorgesehen, den Effekt, dass Blätter, die zumindest teilweise mit einer selbstklebenden Klebeschicht versehen und Bestandteil eines Blattstapels bilden, beim Schneiden nicht am Messer haften bleiben, ausschließlich durch die besondere Ausbildung des Messers zu erzielen. So ist es gemäß der Erfindung wesentlich, dass ein rauer Bereich des Messers die Basis für das Antihaftmittel bildet. Dieser raue Bereich bewirkt, dass zwischen die aufgrund der Aufrauung gebildeten erhöhten Bereiche Antihaftmittel gelangen kann und, da es zwischen diesen positioniert ist, beim Schneiden dort verbleibt und nicht unter der mittels des Blattstapels auf das Messer ausgeübten Flächenpressung von dem Messer abgetragen wird. Durch dieses Zusammenwirken des rauen Messerbereichs mit dem auf diesen aufgebrachten Antihaftmittel ergibt sich eine sehr hohe Standzeit des Messers bei nicht am Messer anhaftenden Schneidgut.

Grundsätzlich reicht es, wie gemäß der erfindungsgemäßen Lösung vorgeschlagen, aus, zumindest die erste Messeroberfläche rau zu gestalten, insbesondere ausgenommen das spitze Messerende, und diesen rauen Bereich des Schneidmessers mit dem Antihaftmittel zu versehen. Demzufolge kann an diesem schwer zugänglichen Bereich des Messers - erste Messeroberfläche/Messerrücken - kein Klebstoff haften und es ist demzufolge nicht erforderlich, diesen Bereich des Messers von Klebstoff zu säubern. Bei dieser Ausgestaltung des Messers muss eventuell im Bereich der zweiten Messeroberfläche anhaftender Klebstoff manuell entfernt werden. Dieser Bereich des Messers ist aber besser zugänglich.

Es wird aber als besonders vorteilhaft angesehen, wenn auch die zweite Oberfläche rau ist, ausgenommen das spitze Messerende, und dieser raue Bereich des Schneidmessers mit dem Antihaftmittel versehen ist. Demzufolge kann weder im Bereich der ersten Messeroberfläche noch im Bereich der zweiten Messeroberfläche Klebstoff in nennenswertem Maße haften. Mit einem derart aufgerauten und mit dem Antihaftmittel versehenen Messer kann im vollautomatischen Betrieb geschnitten werden, ohne, dass es einer Reinigung des Messers bedarf.

Das spitze Messerende ist deshalb nicht rau, weil es in diesem Bereich geschliffen ist, um den Schnitt vollführen zu können. In diesem Bereich sind die Trennkräfte, die auf den Blattstapel wirken, und damit die auf das spitze Messerende ausgeübten Reaktionskräfte so hoch, dass dort nicht die Gefahr des Anhaftens von Klebstoff besteht.

Das Antihaftmittel kann durchaus auch im Bereich des spitzen Messerendes vorgesehen sein. Dies ist produktionstechnisch von Vorteil, weil nicht Rücksicht auf eine Abdeckung des spitzen Messerendes genommen werden muss. Ist das spitze Messerende mit einen Antihaftmittel versehen, ist dieses bereits nach wenigen Schneidvorgängen unter Einwirkung der über den Blattstapel ausgeübten Kräfte von dem spitzen Messerende entfernt, weil das glatte Messerende keinen ausreichenden Halt für das Antihaftmittel während des Schneidvorgangs bietet.

Es wird als besonders vorteilhaft angesehen, wenn das Antihaftmittel eine Beschichtung ist. Das Antihaftmittel weist insbesondere Keramik und Polytetrafluorethylen, Kurzbezeichnung PTFE (Handelsname beispielsweise Teflon) auf, insbesondere eine Keramik-PTFE-Beschichtung. Das Antihaftmittel bzw. die Beschichtung kann in ein oder mehreren Gängen auf das Messer aufgetragen werden.

Das Besondere eines Antihaftmittels, das Keramik und PTFE aufweist, ist darin zu sehen, dass die harten Keramikbestandteile geringster Abmessung die besonders dauerhafte Haftung des PTFE an den Keramikbestandteilen und dem Messer gewährleistet. Die Keramikbestandteile wirken mit den rauen Bereichen des Schneidmessers zusammen und das PTFE mit den Keramikteilchen und den rauen Bereichen des Messers. Besonders gute Haftergebnisse lassen sich erzielen, wenn die raue Oberfläche des Messers durch Strahlen, insbesondere Sandstrahlen erzeugt ist.

Durch das Antihaftmittel in Verbindung mit dem rauen Bereich des Schneidmessers, insbesondere das Antihaftmittel, das Keramik und PTFE aufweist, ergibt sich eine Oberflächenstruktur des beschichteten Messers in einer minimierten Oberfläche, an der Klebstoff beim Schneiden haften kann. Die Oberfläche des beschichteten Messers ist mikrostrukturiert.

Das erfindungsgemäße Verfahren zum Behandeln des beschriebenen Messers ist für den Fall des erstmaligen Schleifens des Messers und damit ein neues Messer durch folgende Verfahrensschritte gekennzeichnet:
a. Schleifen des Messers im Bereich der zweiten Messeroberfläche,
b. Abdecken des spitzen Messerendes,
c. Aufrauen des Messers bei abgedecktem spitzen Messerende im Bereich der ersten Messeroberfläche,
d. Aufbringen eines Antihaftmittels auf den aufgerauten Bereich des Messers.

Für den Fall, dass beide Messeroberflächen aufzurauen sind, ist statt des Verfahrensschritts c. der modifizierte Verfahrensschritt c., nämlich das Aufrauen des Messers bei abgedecktem spitzen Messerende im Bereich der ersten und zweiten Messeroberfläche vorgesehen.

Wie vorstehend dargelegt, beziehen sich diese Verfahrensschritte, die in der genannten Folge vollzogen werden, auf den Zustand des neuen Messers, je nachdem ob nur die erste Messeroberfläche aufgeraut ist oder aber die erste und die zweite Messeroberfläche aufgeraut sind.

Für den Fall des Nachschleifens des Messers, das nur im Bereich der ersten Messeroberfläche aufgeraut ist, reicht es aus, den Verfahrensabschnitt a., somit das Schleifen des Messers im Bereich der zweiten Messeroberfläche durchzuführen. Die Verfahrensschritte b., c. und d. sind nicht vorzunehmen, weil es nur auf den Nachschliff der zweiten Messeroberfläche ankommt und die aufgeraute erste Messeroberfläche nach wie vor mit dem Antihaftmittel versehen ist. Selbstverständlich besteht die Möglichkeit, auch beim Nachschleifen eines solchen Messers auch die Verfahrensschritte b., c. und d. vorzusehen.

Für den Fall, dass das Messer sowohl im Bereich der ersten Messeroberfläche als auch im Bereich der zweiten Messeroberfläche aufgeraut worden ist, ist bei einem Nachschliff des Messers im Bereich der zweiten Messeroberfläche zumindest erforderlich, das spitze Messerende abzudecken und diese zweite Messeroberfläche erneut aufzurauen und dort das Antihaftmittel aufzubringen. Selbstverständlich können in diesem Fall auch alle Verfahrensschritte a. bis d. vollzogen werden, wobei beim Verfahrensschritt c. das Messer bei abgedecktem spitzen Messerende im Bereich der ersten und zweiten Messeroberfläche aufgeraut wird und im Sinne des Verfahrensschritts d. das Antihaftmittel dann auf die aufgerauten Bereiche des Messers aufgebracht wird.

Weitere Merkmale der Erfindung sind in der Beschreibung der nachfolgenden Zeichnung und in der Zeichnung selbst dargestellt.

In der Zeichnung ist die Erfindung anhand eines Messers zur Verwendung bei einer Planschneidmaschine dargestellt, ohne auf diese Ausführungsform beschränkt zu sein. Es zeigt:
- Figur 1: eine Seitenansicht des erfindungsgemäßen Messers, senkrecht zur Schneidebene des Messers und quer zur Längserstreckung des Messers gesehen,
- Figur 2: einen Schnitt durch das in Figur 1 gezeigte Messer gemäß der Linie A-A, allerdings in einem ersten Zwischenschnitt der Behandlung des Messers,
- Figur 3: die in Figur 2 gezeigte Einzelheit X in vergrößerter Darstellung,
- Figur 4: einen Schnitt durch das Messer gemäß der Linie A-A, allerdings für einen zweiten Behandlungsschritt des Messers.

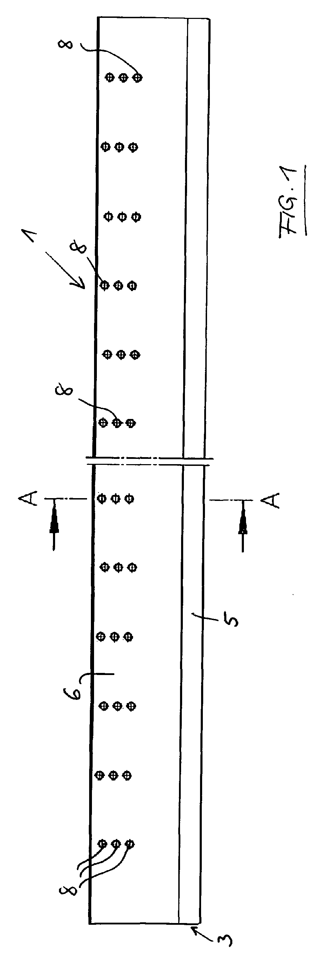

Veranschaulicht ist das gerade, lang ausgebildete Messer 1, das eine erste Messeroberfläche 2 in der Schneidebene, einen keilförmigen Messerbereich 3 mit spitzem Messerende 4, eine zusammen mit dem Messeroberflächenbereich 2 den Keil bildende, zweite Messeroberfläche 5 und eine oberhalb des Keils angeordnete, parallel zur ersten Messeroberfläche 2 angeordnete dritte Messeroberfläche 6 aufweist. Die Schneidebene des Messers 1 fällt mit der ersten Messeroberfläche 2 zusammen. Geschnitten wird im Schwingschnitt, womit das Messer beim Schnitt, bezogen auf die Darstellung nach Figur 1 sowohl eine Bewegung nach unten als auch zur Seite ausführt.

Im Bereich des durch die erste Messeroberfläche 2 gebildeten Messerrückens weist das Messer 1, ausgehend von dem spitzen Messerende 4 bis knapp zur Hälfte der Höhe des Messers 1 einen Hartmetalleinsatz 7 auf. In der oberen Hälfte weist das Messer 1 eine Vielzahl von Gewindebohrungen 8 zum Befestigen des Messers 1 an einem nicht veranschaulichten Messerträger der Planschneidmaschine in unterschiedlichen Vertikalpositionen des Messers 1 auf. Die Befestigung des Messers 1 am Messerträger erfolgt durch Schrauben, die durch Bohrungen im Messerträger hindurch gesteckt und in einzelne Gewindebohrungen 8 des Messers eingeschraubt werden.

Vor dem Behandeln eines neuen Messers wird dieses geschliffen, und zwar entlang der gesamten zweiten Messeroberfläche 5. Hierbei bildet sich insbesondere das spitze Messerende. Ein Schleifen entlang der ersten Messeroberfläche 2 ist zum Erzeugen der spitzen Messerschneide 4 nicht erforderlich.

Die nachfolgenden Ausführungen betreffen den Fall der Behandlung des neuen Messers im Bereich der ersten Messeroberfläche 2 und der zweiten Messeroberfläche 5:

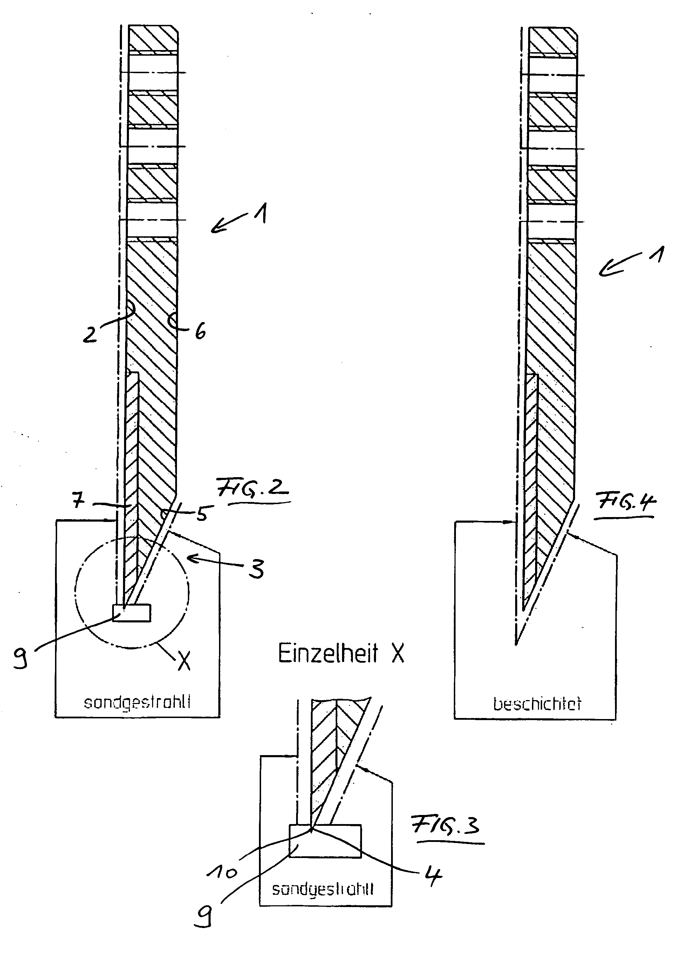

Zum Behandeln des Messers 1, damit an diesem beim Schnitt kein Klebstoff haften kann, wird ein herkömmliches Messer 1, das insbesondere aus Metall besteht, in eine leistenförmige Aufnahme 9 eingesetzt, wie es der Darstellung der Figuren 2 und 3 zu entnehmen ist. Diese Aufnahme 9 hat oben eine Kerbe 10, deren Querschnitt und Form der des spitzen Messerendes 4 entspricht. Die Aufnahme 9 ist geringfügig länger als das Messer 1, so dass beim Einsetzen des Messers 1 in die Kerbe 10 der Aufnahme 9 das spitze Messserende 4 über die gesamte Messerlänge abgedeckt ist. Statt der leistenförmigen Aufnahme 9 könnte auch eine bei einer Maschine zum Schneiden oder Stanzen üblicherweise Verwendung findende Schneidleiste eingesetzt werden, auf die das Messer 1 abgesenkt wird und damit geringfügig in die Schneidleiste eindringt, womit das spitze Messerende 4 über die gesamte Messerlänge abgedeckt ist. Anschließend werden die Bereiche des Messers 1, die mit einer strichpunktierten Linie neben dem Messer 1 veranschaulicht sind, sandgestrahlt. Es handelt sich hierbei um das Messer 1 im Bereich der ersten Messeroberfläche 2, und zwar die gesamte Höhe des Messers 1 bis auf das eingetauchte spitze Messerende 4, ferner um die zweite Messeroberfläche 5 in deren gesamten Höhenerstreckung bis auf das in die Aufnahme 9 eingetauchte spitze Messerende 4. Durch dieses Schützen des spitzen Messerendes 4 während des Sandstrahlvorganges erfolgt keine Aufrauung des spitzen Messerendes 4.

Im konkreten Fall wird das Messer im Bereich des spitzen Messerendes 4 über eine Tiefe von < 1 mm, insbesondere ≤ 0,5 mm abgedeckt.

Nach dem Sandstrahlen des Messers 1 im vorbeschriebenen Sinne wird die Aufnahme 9 entfernt und das Messer 1 im Bereich der ersten Messeroberfläche 2 und der zweiten Messeroberfläche 5, somit einschließlich des spitzen Messerendes 4 mit einer Keramik-PTFE-Beschichtung beschichtet. Die beschichteten Bereiche sind in Figur 4 mit strichpunktierter Linie veranschaulicht.

Das Messer ist damit einsatzbereit für den Verwendungszweck.

Ist das Messer nach einer Vielzahl von Schnitten stumpf geworden, muss es nachgeschliffen werden. Das Nachschleifen erfolgt im Bereich der zweiten Messeroberfläche 5. Dann wird das Messer 1 erneut in die Aufnahme 9 eingesetzt und bei abgedecktem spitzen Messerende 4 die zweite Messeroberfläche 5 gesandstrahlt, anschließend das Messer 1 aus der Aufnahme genommen und die zweite Messeroberfläche 5 beschichtet. Die Beschichtung kann durchaus im Bereich der zweiten Messeroberfläche 5 bis zum spitzen Messerende reichen, weil aufgrund des nicht aufgerauten, somit glatten Bereiches des Messers im Bereich des spitzen Messerendes beim Schnitt die Beschichtung dort abgetragen wird.

Ein Messer zum Stanzen von Blattstapeln ist im wesentlichen entsprechend dem vorbeschriebenen Messer 1 ausgebildet und behandelt. Das Stanzmesser weist Ringform auf, womit die Figuren 2 bis 4 einen Schnitt durch die Ringwandung des Stanzmessers darstellen. Die erste Messeroberfläche 2 ist in diesem Fall in das Ringinnere gerichtet. Bei einem Stanzmesser entfallen die veranschaulichten Bohrungen; das Messer wird in der für Stanzmesser üblichen Art und Weise befestigt.

## Patentansprüche

1. Messer (1) zur Verwendung bei einer Maschine zum Schneiden oder Stanzen von Blattstapeln, wobei das Messer (1) einen keilförmigen Messerbereich (3) mit spitzem Messerende (4) aufweist, zur Ausbildung einer ersten Messeroberfläche (2) in der Schneidebene des Messers (1) und einer im Keilwinkel zur ersten Messeroberfläche (2) angeordneten zweiten Messeroberfläche (5), **dadurch gekennzeichnet, dass** zumindest die erste Messeroberfläche (2) rau ist und dieser raue Bereich des Messers (1) mit einem Antihaftmittel versehen ist.

2. Messer nach Anspruch 1, **dadurch gekennzeichnet, dass** zumindest die erste Messeroberfläche (2) rau ist, ausgenommen das spitze Messerende (4), und dieser raue Bereich des Messers (1) mit dem Antihaftmittel versehen ist.

3. Messer nach Anspruch 1 oder 2, **dadurch gekennzeichnet, dass** die zweite Messeroberfläche (5) rau ist, ausgenommen das spitze Messerende (4), und dieser raue Bereich des Messers (1) mit dem Antihaftmittel versehen ist.

4. Messer nach einem der Ansprüche 1 bis 3, **dadurch gekennzeichnet, dass** das spitze Messerende (4) mit dem Antihaftmittel versehen ist.

5. Messer nach einem der Ansprüche 1 bis 4, **gekennzeichnet durch** den mittels Strahlen erzeugten rauen Bereich.

6. Messer nach einem der Ansprüche 1 bis 5, **dadurch gekennzeichnet, dass** das Antihaftmittel eine Beschichtung ist.

7. Messer nach einem der Ansprüche 1 bis 6, **dadurch gekennzeichnet, dass** das Antihaftmittel Keramik und Polytetrafluorethylen aufweist, insbesondere eine Keramik-Polytetrafluorethylen-Beschichtung ist.

8. Messer nach einem der Ansprüche 1 bis 7, **dadurch gekennzeichnet, dass** es aus Metall besteht und mit einem Hartmetalleinsatz (7) versehen ist, der das spitze Messerende (4) aufweist.

9. Messer nach einem der Ansprüche 1 bis 8, **dadurch gekennzeichnet, dass** es gerade oder ringförmig ausgebildet ist.

10. Verfahren zum Behandeln eines Messers gemäß einem der Ansprüche 1 bis 9, **gekennzeichnet durch** folgende Verfahrensschritte:
a. Schleifen des Messers (1) im Bereich der zweiten Messeroberfläche (5),
b. Abdecken des spitzen Messerendes (4),
c. Aufrauen des Messers (1) bei abgedecktem spitzen Messerende (4) im Bereich der ersten Messeroberfläche (2),
d. Aufbringen des Antihaftmittels auf den aufgerauten Bereich des Messers (1).

11. Verfahren nach Anspruch 10, **gekennzeichnet durch** folgende Merkmale:
a. Schleifen des Messers (1) im Bereich der zweiten Messeroberfläche (5),
b. Abdecken des spitzen Messerendes (4),
c. Aufrauen des Messers (1) bei abgedecktem spitzen Messerende (4) im Bereich der ersten und zweiten Messeroberfläche (2, 5),
d. Aufbringen des Antihaftmittels auf den aufgerauten Bereich des Messers (1).

12. Verfahren nach Anspruch 10 oder 11, **dadurch gekennzeichnet, dass** das Messer (1) im Bereich des spitzen Messerendes (4) über eine Tiefe von < 1 mm, insbesondere ≤ 0,5 mm abgedeckt wird.

13. Verfahren nach einem der Ansprüche 10 bis 12, **dadurch gekennzeichnet, dass** das Aufrauen des Messers (1) durch Strahlen, insbesondere Sandstrahlen erfolgt.
